(19) Europäisches Patentamt
European Patent Office
Office européen des brevets

(11) EP 4 238 851 A1

(12) EUROPEAN PATENT APPLICATION
published in accordance with Art. 153(4) EPC

(43) Date of publication:
06.09.2023 Bulletin 2023/36

(21) Application number: 21884594.9

(22) Date of filing: 18.08.2021

(51) International Patent Classification (IPC):
B61L 15/00 (2006.01)      G05B 23/02 (2006.01)

(52) Cooperative Patent Classification (CPC):
Y02P 90/02

(86) International application number:
PCT/CN2021/113342

(87) International publication number:
WO 2022/088862 (05.05.2022 Gazette 2022/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.10.2020 CN 202011193911

(71) Applicant: CRRC Datong Co., Ltd.
Pingcheng District
Datong
Shaanxi 037038 (CN)

(72) Inventors:
• XIE, Hongliang
  Datong City, Shanxi 037038 (CN)
• MA, Lantong
  Datong City, Shanxi 037038 (CN)
• LI, Zhonghai
  Datong City, Shanxi 037038 (CN)

(74) Representative: Cabinet Beau de Loménie
158, rue de l'Université
75340 Paris Cedex 07 (FR)

(54) **TEST METHOD AND APPARATUS FOR ELECTRIC LOCOMOTIVE CONTROL CIRCUIT, AND MOBILE TERMINAL**

(57) A test method (400) for an electric locomotive control circuit (1), comprising: (S 1) in response to a first operation, sending a control instruction test signal to a processor (13) to control the processor (13) to disable a communication connection with an actuator (14); (S2) acquiring a plurality of control instructions received by the processor (13), and outputting control instruction test pass information when determining that the plurality of control instructions are the same as a plurality of preset control instructions; (S3) in response to a second operation, sending an actuator (14) test signal to the processor (13) to control the processor (13) to enable the communication connection with the actuator (14); and (S4) sending a plurality of virtual control instructions to the processor (13), receiving from the processor (13) feedback signals corresponding to the plurality of virtual control instructions, and sending actuator (14) test pass information when each feedback signal is the same as a preset feedback signal corresponding to the corresponding virtual control instruction. The control circuit (1) of an electric locomotive can be tested efficiently, accurately and automatically. Further disclosed are a test apparatus (2) for an electric locomotive control circuit (1), and a mobile terminal (500).

FIG. 1

EP 4 238 851 A1

## Description

### CROSS REFERENCE

The present disclosure claims the priority of the Chinese Patent Application No. 202011193911.2, entitled "Test Method and Apparatus for Electric Locomotive Control Circuit and Mobile Terminal" filed on October 30, 2020, and the entire contents of which are incorporated herein by reference.

### TECHNICAL FIELD

The present disclosure relates to the technical field of electric locomotive manufacturing, and in particular, to a test method, a test apparatus and a mobile terminal for testing an electric locomotive control circuit.

### BACKGROUND

In the production process of the electric locomotive, the electric locomotive control circuit needs to be tested, so as to ensure that the actuator in the electric locomotive can make a correct action in response to the control instruction. In the related art, the process of testing the electric locomotive control circuit is usually that: the control instruction sending apparatus on a console is operated by test personnel in a cab so as to send a control instruction to a processor located in a machinal room, the processor sends a control command to the actuator according to the control instruction, the actuator sends a feedback signal to the processor after performing an action in response to the control command, the processor displays the feedback signal on the screen of the console in the cab, the test personnel determine whether the control instruction just sent is correctly responded or not by observing the feedback signal displayed on the screen of the console, and it is determined that the electric locomotive control circuit is normal when all the feedback signals are correct.

However, since the number of control instructions of the electric locomotive is large, the test personnel need to search for corresponding feedback signals from various data on the screen at every operation, so as to determine that the operation is correctly responded. If the correct feedback signal is not obtained in the operation, the operation data needs to be recorded manually, so that the working efficiency is low, and the human error is extremely easy to occur. In addition, if the correct feedback signal is not obtained in the operation, it cannot be determined which part of the electric locomotive control circuit has a fault, and the whole circuit needs to be overhauled and checked entirely, so that the working efficiency is extremely low.

It should be noted that the information disclosed in the above background part is only used to enhance the understanding of the background of the present disclosure, and therefore may include information that does not constitute related art known to those of ordinary skill in the art.

### SUMMARY

The objective of the present disclosure is to provide a test method and test apparatus for an electric locomotive control circuit, and a mobile terminal, which are used for overcoming the problems of low test efficiency of the electric locomotive control circuit, low search efficiency of feedback data, excessive dependence on manual inspection and the like caused by limitations and defects of the related art at least to a certain extent.

According to a first aspect of the present disclosure, there is provided a test method for an electric locomotive control circuit, the electric locomotive control circuit includes a control instruction sending apparatus, a control instruction receiving apparatus, a processor and an actuator connected in sequence, and the method includes: sending a control instruction test signal to the processor in response to a first operation, so as to control the processor to disable a communication connection with the actuator; obtaining a plurality of control instructions received by the processor, and outputting control instruction test pass information when determining that the plurality of control instructions are the same as a plurality of preset control instructions; sending an actuator test signal to the processor in response to a second operation, so as to control the processor to enable the communication connection with the actuator; and sending a plurality of virtual control instructions to the processor, receiving feedback signals corresponding to the plurality of virtual control instructions from the processor, and sending actuator test pass information when each feedback signal is the same as a preset feedback signal corresponding to a corresponding virtual control instruction; where, the plurality of control instructions are sent by test personnel operating the control instruction sending apparatus, and the feedback signal is a feedback signal sent to the processor after the processor sends a virtual control instruction to the actuator and the actuator performs an action in response to the virtual control instruction.

According to a second aspect of the present disclosure, there is provided a test apparatus for an electric locomotive control circuit, the electric locomotive control circuit includes a control instruction sending apparatus, a control instruction receiving apparatus, a processor and an actuator connected in sequence, and the test apparatus is in communication connection with the processor and is configured to execute the test method as described above.

According to a third aspect of the present disclosure, there is provided a mobile terminal, including: a memory; and a processor coupled to the memory, where the processor is configured to execute the test method according to any one of the above based on an instruction stored in the memory.

According to the embodiment of the present disclosure, the control instruction of the processor in the electric locomotive control circuit is automatically received, so that the control instruction can be tested in batches; and the virtual control instructions are automatically output to the processor and the feedback signals are judged, so that the actuator can be automatically tested in batches. In the whole test process, an operator does not need to operate, search for data and record according to the operation manual, only needs to send two test start signals and operate the control instruction sending apparatus rapidly and in batches, and the test conclusions automatically output can be obtained, so that the test efficiency and the data accuracy of the electric locomotive control circuit can be greatly improved.

It should be understood that the above general description and the following detailed description are exemplary and explanatory only and are not intended to limit the present disclosure.

BRIEF DESCRIPTION OF THE DRAWINGS

The accompanying drawings, which are incorporated in and constitute a part of the description, illustrate embodiments consistent with the disclosure and together with the description serve to explain the principles of the disclosure. Obviously, the drawings in the following description are merely some embodiments of the present disclosure, and for those of ordinary skill in the art, other drawings can also be obtained from these drawings without creative efforts.

FIG. 1 is a schematic diagram of a test apparatus for an electric locomotive control circuit according to an embodiment of the present disclosure.
FIG. 2 is a schematic structural diagram of a test apparatus 2 according to an embodiment of the present disclosure.
FIG. 3 is a schematic structural diagram of a signal conversion apparatus 21 according to an embodiment of the present disclosure.
FIG. 4 is a flowchart of a test method according to an embodiment of the present disclosure.
FIG. 5 is a schematic diagram of a mobile terminal according to an exemplary embodiment of the present disclosure.

DETAILED DESCRIPTION

Example embodiments will now be described more fully with reference to the accompanying drawings. Example embodiments, however, can be implemented in various forms and should not be construed as limited to the embodiments set forth herein; by contrast, these embodiments are provided so that the present disclosure will be thorough and complete, and will fully convey the concept of example embodiments to those skilled in the art. The described features, structures, or characteristics may be combined in one or more embodiments in any suitable manner. In the following description, numerous specific details are provided to give a thorough understanding of embodiments of the present disclosure. However, those skilled in the art will appreciate that the technical solutions of the present disclosure may be practiced with one or more of the specific details being omitted, or by employing other methods, components, apparatuses, steps, etc. In other instances, common-known technical solutions are not shown or described in detail to avoid obscuring the aspects of the present disclosure.

In addition, the drawings are merely schematic diagrams of the present disclosure, and the same reference numerals in the drawings represent the same or similar parts, and thus the repeated description of them will be omitted. Some block diagrams shown in the drawings are functional entities that do not necessarily correspond to physical or logically independent entities. These functional entities may be implemented in the form of software, or these functional entities may be implemented in one or more hardware modules or integrated circuits, or these functional entities may be implemented in different networks and/or processor apparatuses and/or microcontroller apparatuses.

Exemplary embodiments of the present disclosure will be described in detail below with reference to the accompanying drawings.

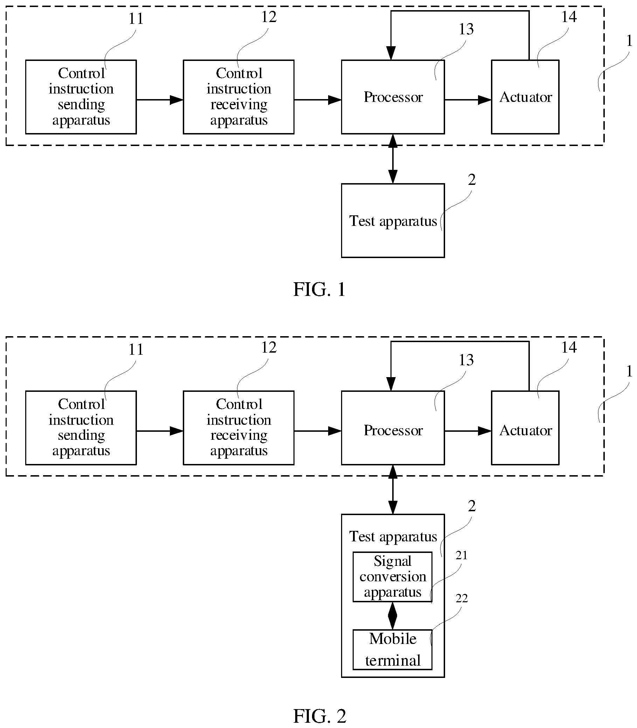

FIG. 1 is a schematic diagram of a test apparatus for an electric locomotive control circuit according to an embodiment of the present disclosure.

Referring to FIG. 1, the electric locomotive control circuit 1 includes a control instruction sending apparatus 11, a control instruction receiving apparatus 12, a processor 13 and an actuator 14 which are connected in sequence, and the test apparatus 2 is in communication connection with the processor 13.

In the embodiment as shown in FIG. 1, the control instruction sending apparatus 11 is, for example, a general instruction console, and the test personnel may implement the sending of the control instruction signal by performing preset operations such as pulling and clicking on the plurality of operation rods and buttons on the instruction console, and the control instruction signal may be, for example, an analog signal.

The control instruction receiving apparatus 12 is, for example, a signal converter, configured to convert a control instruction signal from the control instruction sending apparatus 11 into a control instruction that can be identified by the processor 13. For example, the control instruction receiving apparatus 12 sets a bit corresponding to the preset control instruction in the format data sent to the processor 13 to be 1. The above processing of the control instruction is only an example. In practical applications, there are a plurality of models of control instruction sending apparatuses and control instruction receiving apparatuses, and the present disclosure is not limited to this.

The processor 13 is, for example, a Micro Processor Unit (MPU).

The actuator 14 may include a plurality of locomotive components, which is configured to perform a variety of actions in response to the control instruction and send a feedback signal to the processor 13. Due to the fact that the actuators in the locomotives of various models are not completely the same, the specific components of the actuator 14 are not specifically limited in the embodiments of the present disclosure.

The control instruction sending apparatus 11 is provided in the cab, the control instruction receiving apparatus 12, the processor 13 and the actuator 14 are provided in the mechanical room, and the control instruction sending apparatus 11 is in communication connection with the control instruction receiving apparatus 12 through a pre-laid communication line. Generally, the cab is further provided with a display screen, the display screen may also be provided on the instruction console, and the display screen is in communication connection with the processor 13 through a pre-laid communication line for displaying the feedback signal sent by the processor 13.

The test apparatus 2 is in communication connection with the processor 13, and is configured to perform the test method provided by the embodiments of the present disclosure.

FIG. 2 is a schematic structural diagram of a test apparatus 2 according to an embodiment of the present disclosure.

Referring to FIG. 2, in one embodiment, the test apparatus 2 may include:

a signal conversion apparatus 21, provided in the mechanical rom and in communication connection with the processor 13, where the signal conversion apparatus 21 is configured to collect a signal of the processor 13 to obtain a control instruction and a feedback signal received by the processor 13, and send a virtual control instruction to the processor 13;

a mobile terminal 22, provided in the cab and in communication connection with the signal conversion apparatus 21 through a wireless network, where the mobile terminal 22 is configured to receive the control instruction and the feedback signal, generate a virtual control instruction, send the virtual control instruction to the signal conversion apparatus 21, and display the control instruction, the feedback signal, the control instruction test pass information and the actuator test pass information on the screen.

The mobile terminal 22 may be, for example, an industrial tablet computer. When the electric locomotive is tested, the line is generally already laid, and in order to realize the operation of the mobile terminal 22 in the cab, the mobile terminal 22 can be configured to communicate with the signal conversion apparatus 21 located in the mechanical room through the industrial wireless network.

The signal conversion apparatus 21 is provided in the mechanical room, so that the data of the processor 13 can be collected more accurately, and efficient and accurate communication with the processor 13 is realized.

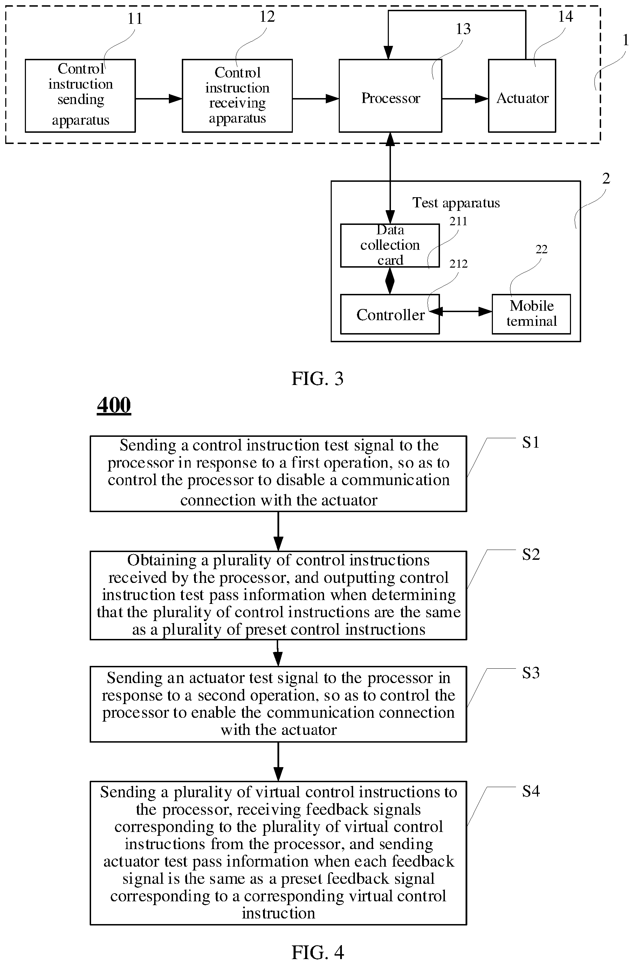

FIG. 3 is a schematic structural diagram of a signal conversion apparatus 21 according to an embodiment of the present disclosure.

Referring to FIG. 3, in one embodiment, the signal conversion apparatus 21 may include:

a data collection card 211, in communication connection with the processor 13, where the data collection card 211 is configured to monitor a first signal from the processor 13 and send a second signal representing the virtual control instruction to the processor 13;

a controller 212, connected with the data collection card 211 and connected with the mobile terminal 22 through a wireless network, where the controller 212 is configured to acquire the first signal, acquire the control instruction and the feedback signal according to the first signal, send the control instruction and the feedback signal to the mobile terminal 22, receive the virtual control instruction sent by the mobile terminal 22, convert the virtual control instruction into the second signal, and send the second signal to the data collection card 211.

The data collection card 211 is, for example, an MVB (Multi-Function Vehicle Bus) collection card, for communicating with an MVB network of an electric locomotive. MVB is a serial data communication bus that is primarily used (but not dedicated to) between interconnected apparatuses with interoperability and interchangeability requirements, with a transmission rate of 1.5 Mbps. In the embodiment of the present disclosure, the MVB network of the electric locomotive mainly includes a communication line between the control instruction receiving apparatus 12 and the processor 13, and a communication line between the actuator 14 and the processor 13. The MVB collection card can monitor the communication data of the MVB network through wireless communication, and transmit all monitored communication data to the data processing apparatus at the rear end. In the embodiment as shown in FIG. 3, the data collection card 211 monitors communication data between the processor 13 and the control instruction receiving apparatus 12 and the actuator 14, and transmits the monitored communication data to the controller 212.

The controller 212 is configured to identify the control instruction and the feedback signal in all the received communication data, forward the identified control instruction and the feedback signal to the mobile terminal 22, and forward the received virtual control instruction to the data collection card 211. Due to the fact that the control instruction and the feedback signal are generally with a data structure of fixed format, the controller 212 can identify the control instruction in a plurality of pieces of information according to the first preset format, and identify the feedback signal in a plurality of information according to the second preset format. After the control instruction or the feedback signal is identified, the controller 212 sends the control instruction or the feedback signal to the mobile terminal 22 through the wireless network for further processing by the mobile terminal 22. When the mobile terminal 22 sends the virtual control instruction to the controller 212 through the wireless network, the controller 212 converts the virtual control instruction into the data structure the same as the control instruction according to the first preset format, and sends the virtual control instruction after format conversion to the data collection card 211, and controls the data collection card 211 to send the virtual control instruction to the processor 13.

By cooperating with the signal conversion apparatus 21, the mobile terminal 22 may implement a test method according to the embodiment of the present disclosure.

FIG. 4 is a flowchart of a test method according to an embodiment of the present disclosure.

Referring to FIG. 4, the test method 400 may include:

In step S1, a control instruction test signal is sent to the processor in response to a first operation, so as to control the processor to disable a communication connection with the actuator;

In step S2, a plurality of control instructions received by the processor are obtained, and control instruction test pass information is output when determining that the plurality of control instructions are the same as a plurality of preset control instructions;

In step S3, an actuator test signal is sent to the processor in response to a second operation, so as to control the processor to enable the communication connection with the actuator;

In Step S4, a plurality of virtual control instructions are sent to the processor, feedback signals corresponding to the plurality of virtual control instructions are received from the processor, and actuator test pass information is sent when each feedback signal is the same as a preset feedback signal corresponding to a corresponding virtual control instruction.

In the embodiment of the present disclosure, the plurality of control instructions are sent through the control instruction sending apparatus operated by the test personnel, and the feedback signal is a feedback signal sent to the processor after the processor sends the virtual control instruction to the actuator and the actuator performs an action in response to the virtual control instruction.

According to the embodiments of the present disclosure, the test of the control instruction and the test of the actuator are separated, both of which are tested separately, so as to achieve the effects of improving the test efficiency and improving the troubleshooting efficiency.

In step S 1, the first operation may, for example, be an operation of the test personnel on a control on the screen of the mobile device 22, such as a click on a "control instruction test start" button. After receiving the first operation, the mobile device 22 generates a preset control instruction test signal and outputs the preset control instruction test signal to the signal conversion apparatus 21, so as to send the control instruction test signal to the processor 13. After receiving the control instruction test signal, the processor 13 disables the communication connection between the processor 13 and the actuator 14, that is, stops to respond to the control instruction.

Next, the test personnel may operate the control instruction sending apparatus 11 to send the control instruction to be tested. In the embodiment of the present disclosure, the sequence that the test personnel operate the control instruction sending apparatus 11 is not restricted, so long as the control instruction sending apparatus 11 corresponding to all the control instructions to be tested is completely operated. Since there is no need to be restricted by the sequence, the test personnel can very quickly operate all the control instruction sending apparatuses 11 once, which greatly improves the test efficiency.

In step S 2, after receiving a control instruction translated and transmitted by the signal conversion apparatus 21, the mobile terminal 22 compares the control instruction with a plurality of preset control instructions, and determines that the control instruction is correctly transmitted when it is determined that the current control instruction is the same as one of the plurality of preset control instructions. Among them, the preset control instruction is the correct data of the control instruction to be tested, and the name of the preset control instruction may be the same as that of the control instruction to be tested.

In one embodiment, the mobile terminal 22 may determine that the control instructions sent by the control instruction sending apparatus 11 via the control instruction receiving apparatus 12 in the present test are all correct when it is determined that the plurality of preset control instructions all have control instructions corresponding to them, and output control instruction test pass information. The control instruction test pass information may be in, for example, a text form, an icon form, or another form, which is not specifically limited in the present disclosure.

In another embodiment, the control instruction test process may be displayed in a more flexible manner. For example, a first state of an icon corresponding to the plurality of preset control instructions can be displayed on the screen, and then a second state of the first icon of the preset control instruction corresponding to the control instruction is displayed on the screen when the control instruction is judged to be the same as one of the plurality of preset control instructions.

The first icon may identify a character identifier of a corresponding preset control instruction to indicate that each first icon corresponds to which preset control instruction. The first state may be, for example, a color state of the first icon, and the second state is, for example, a gray state of the first icon; or, the first state may be, for example, a three-dimensional state of the first icon, and the second state is, for example, a flat state of the first icon, etc. Those skilled in the art may set the form of the icon according to actual requirements, which is not limited to this.

By displaying the state change of the first icon corresponding to the preset control instruction, the test result may be visually displayed to the operator, and the operator can control the current operation progress only by observing the change of the icon.

In yet another embodiment, the mobile terminal 22 may further display only the first icon with a current state being the first state on the screen in response to a fifth operation, that is, screening out the preset control instruction that does not currently obtain the corresponding control instruction, thereby prompting the current test progress of the test personnel when the test personnel do not complete the test, and visually indicating that which control instructions have generated problems when the test personnel have completed the test.

By displaying the test result of the control instruction in real time on the mobile terminal 22 using the icon, it can be avoided that in the related art the test personnel need to search for the data corresponding to the current operation in the plurality of pieces of data, thereby avoiding data errors in the whole test process due to mistakes in the process of searching for and recording the data by the test personnel.

After the test instruction is tested, the test personnel may start the actuator test process through a second operation. The second operation may be, for example, an operation on a "actuator test start" control on the screen, causing that the mobile terminal 22 sends an actuator test signal to the processor 13 through the signal conversion apparatus 21, so as to control the processor 13 to enable the communication connection with the actuator 14, so that the actuator 14 starts to respond to the control instruction. In other embodiments of the present disclosure, both the control instruction test process and the actuator test process may be performed separately, and the test sequence may also be exchanged, which is not specifically limited in the present disclosure.

In step S4, a plurality of virtual control instructions may be sent to the actuator 14 in various manners.

In one embodiment, the plurality of virtual control instructions may be the plurality of preset control instructions mentioned in step S2, that is, using a preset control instruction as a virtual control instruction. In another embodiment, the plurality of virtual control instructions may include all preset control instructions corresponding to all the control instructions to be tested, and may further include control instructions that cannot be sent by the control instruction sending apparatus 11. That is, virous control instructions that are temporarily not put into use in reality, may be set by oneself to perform a test a multi-angle and all-around on the actuator 14, so as to achieve richer test purposes.

In one embodiment, the mobile terminal 22 may send a virtual control instruction to the processor 13 in response to a third operation, a plurality of third operations respectively correspond to the plurality of virtual control instructions, and the third operation includes a preset operation on the control corresponding to the virtual control instruction. The third operation may be, for example, a preset operation on the interface control corresponding to the virtual control instruction, for example, a click on a button control. In this embodiment, the test personnel may click a button control of a virtual control instruction, wait to receive a feedback signal, and then click a button control of a next virtual control instruction, so as to test the virtual control instruction one by one, thus flexibly controlling the test process.

In another embodiment, the n-th virtual control instruction may be sent according to a preset sequence of the virtual control instruction, and after the feedback signal corresponding to the n-th virtual control instruction is obtained, the (n+1)-th virtual control instruction is sent, where $n \geq 1$. In this embodiment, all the virtual control instructions may be automatically tested according to the preset sequence without manual operation, so as to further improve the test efficiency.

The above-mentioned automatic test and manual test may exist alone or coexist, which is not specifically limited in the present disclosure.

The form of receiving the feedback signal may be, for example, displaying the first states of the plurality of second icons corresponding to the plurality of virtual control instructions on the screen, and displaying the second state of the second icon corresponding to the virtual control instruction on the screen when it is determined that a feedback signal is different from the preset feedback signal corresponding to the corresponding virtual control instruction. The second icon may identify the character identifier of the corresponding preset control instruction to indicate that each second icon corresponds to which preset control instruction. The first state may be, for example, a color state of the second icon, and the second state is, for example, a gray state of the second icon; or, the first state may be, for example, a three-dimensional state of the second icon, and the second state is, for example, a flat state of the second icon, etc. In addition, the style and shape of the second icon may be the same as that of the first icon or different from that of the first icon, and those skilled in the art may set the form of the icon according to actual requirements, which is not limited to this.

In another embodiment, only the second icon with the current state being the second state may be displayed on the screen in response to a fifth operation. That is, only the icon corresponding to the virtual control instruction that does not obtain the correct feedback signal may be screened, so as to visually display the test result. By displaying the test result of the control instruction in real time on the mobile terminal 22 using the icon, it can be avoided that in the related art the test personnel need to search for the data corresponding to the current operation in the plurality of pieces of data, thereby avoiding data errors in the whole test process due to mistakes in the process of searching for and recording the data by the test personnel. The fifth operation may be, for example, a click on a data screening button, and the fifth operation may be the same as the third operation described above, or may be different. That is, a data screening button may be clicked to simultaneously realize the screening and displaying of the control instruction test result (the first icon) and the screening and displaying of the actuator test result (the second icon), and two data screening buttons may also be provided respectively, so as to realize the screening and displaying of the first icon and the second icon.

By using the icon form to identify whether the feedback information is correct or not, the test result can be visually displayed to the operator, and the operator can control the current operation progress only by observing the icon change, thereby prompting the current test progress of the test personnel when the test personnel do not complete the test, and visually indicating that which control instructions have generated problems when the test personnel have completed the test.

In summary, the embodiments of the present disclosure change the test mode of the electric locomotive control circuit, where a discrete operation mode of sending a control instruction and observing an execution action is changed to a centralized operation mode, in which a centralized test is performed on whether the sending of the control instruction is correct, and then a centralized check is performed on whether the action response is correct. In addition, the problem of mutual mistakes of data collection is overcome by using MVB collection card to directly read and write MVB network data. The problem of low efficiency of the previous discrete operation is changed by centralized testing of a control instruction and a feedback signal. A data anomaly reminding mechanism is added by a technical means of comparing a collected value with a preset value, thereby overcoming the problems of wrong filling and missing filling of test conclusions, further eliminating the influence of human factors on the product quality, improving the effects of data reliability and product quality consistency, and being able to better achieve the purpose of test efficiency.

It should be noted that although several modules or units of a device for action execution are mentioned in the above detailed description, such division is not mandatory. Indeed, according to embodiments of the present disclosure, the features and functions of the two or more modules or units described above may be concretized in one module or unit. On the contrary, the features and functions of one module or unit described above may be further divided into a plurality of modules or units for concretization.

In an exemplary embodiment of the present disclosure, a mobile terminal capable of implementing the above method is further provided.

Those skilled in the art will appreciate that various aspects of the present invention may be implemented as a system, method, or program product. Therefore, various aspects of the present disclosure may be specifically implemented in the following form: a complete hardware implementation, a complete software implementation (including firmware, microcode, etc.), or an implementation of combining hardware and software, which may be collectively referred to herein as a "circuit", "a module" or "a system".

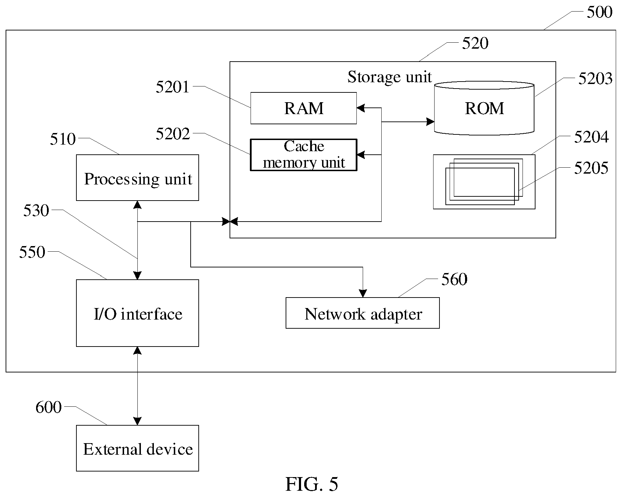

The mobile terminal 500 according to the embodiment of the present invention will be described below with reference to FIG. 5. The mobile terminal 500 as shown in FIG. 5 is merely an example, and should not bring any limitation to the functions and use scope of the embodiments of the present disclosure.

As shown in FIG. 5, the mobile terminal 500 is shown in the form of a general-purpose computing device. The components of the mobile terminal 500 may include, but are not limited to, the at least one processing unit 510, the at least one storage unit 520, and the bus 530 connecting different system components (including the storage unit 520 and the processing unit 510).

Among them, the storage unit stores with a program code, and the program code may be executed by the processing unit 510, so that the processing unit 510 executes the steps according to various exemplary embodiments of the present disclosure described in the foregoing "exemplary method" portion of the present description. For example, the processing unit 510 may perform the steps shown in FIG. 4.

The storage unit 520 may include a readable medium in the form of a volatile memory unit, such as a random access memory unit (RAM) 5201 and/or a cache memory unit 5202, and may further include a read-only memory unit (ROM) 5203.

The storage unit 520 may further include a program/utility 5204 having a set of (at least one) program module 5205 including, but not limited to, an operating system, one or more applications, other program modules and program data, and each or some combination of these examples may include an implementation of a network environment.

The bus 530 may be representing one or more of several types of bus structures, including a storage unit bus or a storage unit controller, a peripheral bus, a graphics acceleration port, a processing unit, or a local bus using any of a variety of bus structures.

The mobile terminal 500 may also communicate with one or more external devices 600 (e.g., a keyboard, a pointing device, a Bluetooth device, etc.), may also communicate with one or more devices that enable the test personnel to interact with the mobile terminal 500, and/or may communicate with any device (e.g., router, modem, etc.) that enables the mobile terminal 500 to communicate with one or more other computing devices. Such communication may be performed through an input/output (I/O) interface 550. In addition, the mobile terminal 500 may also communicate with one or more networks (e.g., a local area network (LAN), a wide area network (WAN), and/or a public network, such as the Internet) through the network adapter 560. As shown in the figure, the network adapter 560 communicates with other modules of the mobile terminal 500 through the bus 530. It should be understood that although not shown in the figure, other hardware and/or software modules may be used in combination with mobile terminal 500, including but not limited to: microcode, device drivers, redundant processing units, external disk drive arrays, RAID systems, tape drives, and data backup storage systems, etc.

Through the description of the above embodiments, those skilled in the art would easily understand that the example embodiments described here may be implemented by software, or may be implemented by software in combination with necessary hardware. Therefore, the technical solution according to the embodiments of the present disclosure may be embodied in the form of a software product, and the software product may be stored in a non-volatile storage medium (which may be a CD-ROM, a USB flash disk, a mobile hard disk, etc.) or on a network, including several instructions to enable a computing device (which may be a personal computer, a server, a terminal apparatus, or a network device, etc.) to perform the method according to the embodiments of the present disclosure.

In an exemplary embodiment of the present disclosure, a computer-readable storage medium is further provided, and a program product capable of implementing the method described in the description is stored on the computer-readable storage medium. In some possible implementations, various aspects of the present disclosure may also be implemented in the form of a program product, including program code, and when the program product is running on a terminal device, the program code is used to cause the terminal device to perform the steps of various exemplary embodiments according to the present disclosure described in the foregoing "exemplary method" portion of the present description.

The program product for implementing the above method according to an embodiment of the present invention may employ a portable compact disk read-only memory (CD-ROM) and includes program code and may be run on a terminal device, such as a personal computer. However, the program product of the present invention is not limited to this. In this document, the readable storage medium may be any tangible medium containing or storing a program that may be used by or in connection with an instruction execution system, apparatus, or component.

The program product may employ any combination of one or more readable medium. The readable medium may be a readable signal medium or a readable storage medium. The readable storage medium may be, for example, but not limited to, an electrical, magnetic, optical, electromagnetic, infrared, or semiconductor system, apparatus, or component, or any combination of the foregoing. More specific examples of the readable storage medium (non-exhaustive lists) include an electrical connection with one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage component, a magnetic storage component, or any suitable combination of the foregoing.

A computer-readable signal medium may include a data signal that is propagated in a baseband or as part of a carrier, where readable program code is carried. Such propagated data signals may take a variety of forms, including but not limited to, electromagnetic signals, optical signals, or any suitable combination of the foregoing. The readable signal medium may also be any readable medium other than a readable storage medium, which may send, propagate, or transmit a program for use by or in connection with an instruction execution system, apparatus, or component.

The program code contained on the readable medium may be transmitted with any suitable medium, including but not limited to wireless, wired, optical cable, RF, etc., or any suitable combination of the foregoing.

Program code for performing the operations of the present invention may be written in any combination of one or more programming languages, including object-oriented programming languages, such as Java, C + +, etc., also including conventional procedural programming languages, such as "C" language or similar programming languages. The program code may be executed entirely on the test personnel computing device, partly on the test personnel device, as a stand-alone software package, partly on the test personnel computing device and partly on the remote computing device, or entirely on the remote computing device or server. In situations involving a remote computing device, the remote computing device may be connected to a test personnel computing device through any type of network, including a local area network (LAN) or a wide area network (WAN), or may be connected to an external computing device (e.g., may be connected via the Internet by an Internet Service Provider).

It should be noted that although several modules or units of a device for action execution are mentioned in the above detailed description, such division is not mandatory. Indeed, according to embodiments of the present disclosure, the features and functions of the two or more modules or units described above may be embodied in one module or unit. On the contrary, the features and functions of one module or unit described above may be further divided into a plurality of modules or units for concretization.

Other embodiments of the present disclosure will be apparent to those skilled in the art from consideration of the description and practice of the invention disclosed here. This application is intended to cover any variations, uses, or adaptations of the present disclosure following the general principles of the present disclosure and including common knowledge or conventional technical means in the art not disclosed in the present disclosure. The description and examples be considered as exemplary only, with a true scope and concept of the present disclosure being indicated by the claims.

Industrial Applicability

According to the embodiment of the present disclosure, the control instruction of the processor in the electric locomotive control circuit is automatically received, so that the control instruction can be tested in batches; and the virtual control instructions are automatically output to the processor and the feedback signals are judged, so that the actuator can be automatically tested in batches. In the whole test process, an operator does not need to operate, search data and record according to the operation manual, only needs to send two test start signals and operate the control instruction sending apparatus rapidly and in batches, and the test conclusions automatically output can be obtained, so that the test efficiency and the data accuracy of the electric locomotive control circuit can be greatly improved.

**Claims**

1. A test method for an electric locomotive control circuit, wherein the electric locomotive control circuit comprises a control instruction sending apparatus, a control instruction receiving apparatus, a processor and an actuator connected in sequence, and the method comprises:

   sending a control instruction test signal to the processor in response to a first operation, so as to control the processor to disable a communication connection with the actuator;
   obtaining a plurality of control instructions received by the processor, and outputting control instruction test pass information when determining that the plurality of control instructions are the same as a plurality of preset control instructions;
   sending an actuator test signal to the processor in response to a second operation, so as to control the processor to enable the communication connection with the actuator; and
   sending a plurality of virtual control instructions to the processor, receiving feedback signals corresponding to the plurality of virtual control instructions from the processor, and sending actuator test pass information when each feedback signal is the same as a preset feedback signal corresponding to a corresponding virtual control instruction;

wherein, the plurality of control instructions are sent by test personnel operating the control instruction sending apparatus, and the feedback signal is a feedback signal sent to the processor after the processor sends a virtual control instruction to the actuator and the actuator performs an action in response to the virtual control instruction.

2. The test method according to claim 1, wherein obtaining the plurality of control instructions received by the processor comprises:

   displaying a first state of a first icon corresponding to the plurality of preset control instructions on a screen; and
   displaying, when determining that a control instruction is the same as a preset control instruction of the plurality of preset control instructions, a second state of a first icon of the preset control instruction corresponding to the control instruction on the screen.

3. The test method according to claim 2, wherein obtaining the plurality of control instructions received by the processor comprises:
   only displaying the first icon with a current state being the first state on the screen in response to a third operation.

4. The test method according to claim 1, wherein sending the plurality of virtual control instructions to the processor comprises:
   sending a virtual control instruction to the processor in response to a fourth operation, wherein a plurality of fourth operations correspond to the plurality of virtual control instructions respectively, and the fourth operation comprises a preset operation on a control corresponding to the virtual control instruction.

5. The test method according to claim 1, wherein sending the plurality of virtual control instructions to the processor comprises:

   sending a n-th virtual control instruction according to a preset sequence of the virtual control instruction; and
   sending a (n+1)-th virtual control instruction after a feedback signal corresponding to the n-th virtual control instruction is obtained, where $n \geq 1$.

6. The test method according to any one of claims 1-5, wherein receiving the feedback signals corresponding to the plurality of virtual control instructions from the processor comprises:

displaying first states of a plurality of second icons corresponding to the plurality of virtual control instructions on a screen; and

displaying, when determining that a feedback signal is different from a preset feedback signal corresponding to a corresponding virtual control instruction, a second state of a second icon corresponding to the virtual control instruction on the screen.

7. The test method according to claim 4, wherein receiving the feedback signals corresponding to the plurality of virtual control instructions from the processor comprises:

only displaying the second icon with a current state being the second state on the screen in response to a fifth operation.

8. A test apparatus for an electric locomotive control circuit, wherein the electric locomotive control circuit comprises a control instruction sending apparatus, a control instruction receiving apparatus, a processor and an actuator connected in sequence, the test apparatus is in communication connection with the processor, and the test apparatus is configured to execute the test method according to any one of claims 1-7.

9. The test apparatus according to claim 8, further comprising:

a signal conversion apparatus, provided in a mechanical room and in communication connection with the processor, wherein the signal conversion apparatus is configured to collect a signal of the processor to obtain a control instruction and a feedback signal received by the processor, and send a virtual control instruction to the processor; and

a mobile terminal, provided in a cab and in communication connection with the signal conversion apparatus through a wireless network, wherein the mobile terminal is configured to receive the control instruction and the feedback signal, generate the virtual control instruction, send the virtual control instruction to the signal conversion apparatus, and display the control instruction, the feedback signal, the control instruction test pass information and the actuator test pass information on a screen.

10. The test apparatus according to claim 9, wherein the signal conversion apparatus comprises:

a data collection card, in communication connection with the processor, wherein the data collection card is configured to monitor a first signal from the processor, and send a second signal representing the virtual control instruction to the processor; and

a controller, connected with the data collection card and connected with the mobile terminal through a wireless network, wherein the controller is configured to acquire the first signal, acquire the control instruction and the feedback signal according to the first signal, send the control instruction and the feedback signal to the mobile terminal, receive the virtual control instruction sent by the mobile terminal, convert the virtual control instruction into the second signal, and send the second signal to the data collection card.

11. A mobile terminal, comprising:

a memory; and

a processor coupled to the memory, wherein the processor is configured to execute the test method according to any one of claims 1-7 based on an instruction stored in the memory.

FIG. 1

FIG. 2

FIG. 3

**400**

Sending a control instruction test signal to the processor in response to a first operation, so as to control the processor to disable a communication connection with the actuator — S1

Obtaining a plurality of control instructions received by the processor, and outputting control instruction test pass information when determining that the plurality of control instructions are the same as a plurality of preset control instructions — S2

Sending an actuator test signal to the processor in response to a second operation, so as to control the processor to enable the communication connection with the actuator — S3

Sending a plurality of virtual control instructions to the processor, receiving feedback signals corresponding to the plurality of virtual control instructions from the processor, and sending actuator test pass information when each feedback signal is the same as a preset feedback signal corresponding to a corresponding virtual control instruction — S4

FIG. 4

FIG. 5

## INTERNATIONAL SEARCH REPORT

| International application No. |
|---|
| **PCT/CN2021/113342** |

**A.    CLASSIFICATION OF SUBJECT MATTER**

B61L 15/00(2006.01)i;   G05B 23/02(2006.01)i

According to International Patent Classification (IPC) or to both national classification and IPC

**B.    FIELDS SEARCHED**

Minimum documentation searched (classification system followed by classification symbols)

B61L; G05B

Documentation searched other than minimum documentation to the extent that such documents are included in the fields searched

Electronic data base consulted during the international search (name of data base and, where practicable, search terms used)

WPABSC; CNTXT; CNABS; USTXTC; CJFD; ENTXTC; VEN; CNKI: 电力, 机车, 控制, 电路, 指令, 判断, 执行机构, 预设, 测, 同, 反馈, 处理器, 虚拟, train, electric, locomotive, control, circuit, instruction, processor, respons+, execut+, judg+, same, preset

**C.    DOCUMENTS CONSIDERED TO BE RELEVANT**

| Category* | Citation of document, with indication, where appropriate, of the relevant passages | Relevant to claim No. |
|---|---|---|
| PX | CN 112339796 A (CRRC DATONG CO., LTD.) 09 February 2021 (2021-02-09) claims 1-11, description paragraphs 5-19, figures 1-5 | 1-11 |
| A | CN 203025559 U (BEIJING RAILWAY SIGNAL CO., LTD.) 26 June 2013 (2013-06-26) description, paragraphs 5-116, and figures 1-5 | 1-11 |
| A | CN 111634308 A (CRRC QINGDAO SIFANG ROLLING STOCK RESEARCH INSTITUTE CO., LTD.) 08 September 2020 (2020-09-08) entire document | 1-11 |
| A | CN 104317286 A (BEIJING RAILWAY INSTITUTE OF MECHANICAL & ELECTRICAL ENGINEERING CO., LTD.) 28 January 2015 (2015-01-28) entire document | 1-11 |
| A | CN 203616647 U (BEIJING RAILWAY SIGNAL CO., LTD.) 28 May 2014 (2014-05-28) entire document | 1-11 |
| A | CN 104407602 A (CHINA SHENHUA ENERGY COMPANY LIMITED et al.) 11 March 2015 (2015-03-11) entire document | 1-11 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 October 2021** | **28 October 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/113342**

**C.    DOCUMENTS CONSIDERED TO BE RELEVANT**

| Category* | Citation of document, with indication, where appropriate, of the relevant passages | Relevant to claim No. |
|---|---|---|
| A | WO 2019142245 A1 (MITSUBISHI ELECTRIC CORP.) 25 July 2019 (2019-07-25) <br> entire document | 1-11 |
| A | JP 2015171256 A (EAST JAPAN RAILWAY CO.) 28 September 2015 (2015-09-28) <br> entire document | 1-11 |
| A | US 2017096154 A1 (WESTINGHOUSE AIR BRAKE TECHNOLOGIES CORPORATION) <br> 06 April 2017 (2017-04-06) <br> entire document | 1-11 |

Form PCT/ISA/210 (second sheet) (January 2015)

### INTERNATIONAL SEARCH REPORT
#### Information on patent family members

| | International application No. |
|---|---|
| | **PCT/CN2021/113342** |

| Patent document cited in search report | | | Publication date (day/month/year) | Patent family member(s) | | | Publication date (day/month/year) |
|---|---|---|---|---|---|---|---|
| CN | 112339796 | A | 09 February 2021 | None | | | |
| CN | 203025559 | U | 26 June 2013 | None | | | |
| CN | 111634308 | A | 08 September 2020 | None | | | |
| CN | 104317286 | A | 28 January 2015 | None | | | |
| CN | 203616647 | U | 28 May 2014 | None | | | |
| CN | 104407602 | A | 11 March 2015 | CN | 104777828 | A | 15 July 2015 |
| WO | 2019142245 | A1 | 25 July 2019 | US | 2021061325 | A1 | 04 March 2021 |
| | | | | DE | 112018006864 | T5 | 15 October 2020 |
| | | | | JP | WO2019142245 | A1 | 06 August 2020 |
| | | | | JP | 6824447 | B2 | 03 February 2021 |
| JP | 2015171256 | A | 28 September 2015 | JP | 6401919 | B2 | 10 October 2018 |
| US | 2017096154 | A1 | 06 April 2017 | WO | 2017058970 | A1 | 06 April 2017 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011193911